# EUROPÄISCHE PATENTSCHRIFT

(11) **EP 3 583 337 B1**
(45) Veröffentlichungstag und Bekanntmachung des Hinweises auf die Patenterteilung: **27.01.2021**
(21) Anmeldenummer: 18706222.9
(22) Anmeldetag: 09.02.2018
(51) Int. Cl.: F16J 15/324, F16J 15/3224, F16J 15/3244, F16J 15/16, F16J 15/34

(54) **DICHTUNGSANORDNUNG UND DICHTUNGSELEMENT MIT HOCHDRUCKSEITIGER SPÜLFUNKTION**
SEAL ARRANGEMENT, AND SEAL ELEMENT WITH A HIGH PRESSURE-SIDE FLUSHING FUNCTION
ARRANGEMENT D'ÉTANCHÉITÉ ET ÉLÉMENT D'ÉTANCHÉITÉ AVEC FONCTION DE RINÇAGE CÔTÉ HAUTE PRESSION

(30) Priorität: 17.02.2017 DE 102017202610
(43) Veröffentlichungstag der Anmeldung: 25.12.2019
(73) Patentinhaber: Trelleborg Sealing Solutions Germany GmbH, 70565 Stuttgart (DE)
(72) Erfinder: WILKE, Mandy, 71034 Böblingen (DE); JORDAN, Holger, 73765 Neuhausen (DE)
(74) Vertreter: Kohler Schmid Möbus Patentanwälte
(86) Internationale Anmeldenummer: PCT/EP2018/053292
(87) Internationale Veröffentlichungsnummer: WO 2018/149747

(56) Entgegenhaltungen:
- EP-A1- 1 561 773
- WO-A1-2007/147391
- JP-A- 2010 014 192
- JP-A- 2010 014 219
- US-A1- 2016 281 855

## Beschreibung

Die Erfindung betrifft eine Dichtungsanordnung sowie ein Dichtungselement mit einer hochdruckseitigen Spülfunktion. Die Dichtungsanordnung weist ein erstes und ein zweites Maschinenteil auf, die unter Ausbildung eines Dichtspalts voneinander beabstandet angeordnet und um eine Bewegungsachse relativ zueinander bewegbar angeordnet sind. Die Dichtungsanordnung umfasst dabei ein Dichtungselement mit einem Fußabschnitt, der an oder in einer Dichtungshaltestruktur, insbesondere in einer Haltenut, eines der beiden Maschinenteile gehalten angeordnet ist. Das Dichtungselement weist einen Dichtkopf auf, welcher mit einem Dichtabschnitt an einer Dichtfläche des jeweilig anderen Maschinenteils dynamisch dichtend anliegt, um eine mit einem Fluid druckbeaufschlagbare Hochdruckseite des Dichtspalts gegenüber einer Niederdruckseite des Dichtspalts abzudichten.

Derlei dynamische Dichtsysteme stellen wesentliche Konstruktionselemente im Maschinenbau sowie im Fahrzeugbau dar. Die Dichtungselemente werden beispielsweise als Radial- oder Axialwellendichtringe eingesetzt. Zugleich sind derlei Dichtungselemente in der Praxis nicht zuletzt aufgrund der technischen Weiterentwicklung der Aggregate immer weiter steigenden Betriebsdrücken, Temperaturen und Gleitgeschwindigkeiten ausgesetzt. Das Versagen von Dichtungselementen führt zu einer unerwünschten Leckage des abzudichtenden Fluids, was insbesondere bei kritischen Anwendungen verheerende Folgen haben kann. Die Dichtungselemente müssen mithin immer höheren Anforderungen an deren Dichtvermögen gerecht werden und sollen dabei dennoch eine verbesserte Lebensdauer aufweisen.

Einer reibungsbedingten Lebensdauerverkürzung der Dichtungselemente wird in der Praxis vorrangig durch ein optimiertes Schmieren im Bereich des an der Dichtfläche anliegenden Dichtabschnitts des Dichtungselements, den Einsatz von Materialpaarungen mit möglichst geringer Gleitreibung sowie einer optimierten Wärmeabfuhr im Bereich der Dichtzone entgegengewirkt. Diesbezüglich wird auch versucht, das sogenannte Rückschleppvermögen der Dichtungselemente weiter zu verbessern. Im Betriebseinsatz der Dichtungsanordnungen kann es im Bereich der Dichtzone bzw. des an der Dichtfläche anliegenden Dichtabschnitts des Dichtungselements bei Einsatz von Schmieröl zu einer thermischen Überbelastung des Schmieröls und in der Folge zur sogenannten Ölkohlebildung kommen. Diese tritt insbesondere bei der Verwendung von Dichtungselementen aus einem Elastomermaterial mit einer hohen Temperaturbeständigkeit auf. Hierzu zählen insbesondere die sogenannten Fluorelastomere, die sich bei modernen Dichtungssystemen etabliert haben. Es werden bekanntlich zwei Arten der Ölkohlebildung unterschieden. So kann sich verkohltes Öl direkt auf der Dichtung oder der Dichtfläche absetzen und dort akkumulieren. Übersteigt die akkumulierte Ölkohleschicht eine bestimmte Dicke, so wird dadurch die Lebensdauer des Dichtungselements verkürzt. Daneben kann Schmieröl aber auch in das Elastomer der Dichtung eindringen und hier zu einer Ölkohlebildung führen. Das Dichtungselement wird dadurch im Bereich ihres Dichtabschnitts bzw. ihrer Dichtkante weniger elastisch. Schlussendlich kann das Dichtungselement Schwingungen der Maschinenteile bzw. Unregelmäßigkeiten der Dichtfläche nicht mehr ausreichend ausgleichen, so dass Öl austritt. Diese zweite Form der Ölkohlebildung hat entscheidende Auswirkungen auf die Lebensdauer des Dichtungselements.

WO 2007/147391 A1 offenbart eine Dichtungsanordnung gemäß dem Oberbegriff des Anspruchs 1.

Es ist deshalb die Aufgabe der Erfindung, eine eingangs genannte Dichtungsanordnung sowie ein Dichtungselement anzugeben, die einer Ölkohlebildung sowie der Ablagerung von Ölkohle am Dichtungselement sowie deren Einlagerung in das Material des Dichtungselements besser entgegenwirken, als bis dato verfügbare Lösungen.

Die das Dichtungselement betreffende Aufgabe wird durch eine Dichtungsanordnung mit den in Anspruch 1 angegebenen Merkmalen gelöst. Das erfindungsgemäße Dichtungselement ist in Anspruch 17 angegeben.

Die erfindungsgemäße Dichtungsanordnung zeichnet sich im Wesentlichen dadurch aus, dass das Dichtungselement hochdruckseitig, insbesondere an seiner Stirnseite bzw. an seiner der Hochdruckseite zuweisenden Seitenflanke, mit zumindest einem Strömungserzeuger bzw. einem Strömungselement versehen ist, durch das bei einer Relativbewegung der beiden Maschinenteile eine Fluidströmung im Dichtspalt bewirkt ist, derart, dass der Dichtkopf hochdruckseitig im Bereich seines Dichtabschnitts von dem Fluid angeströmt wird. Durch das Strömungselement wird mithin im Betrieb der Dichtungsanordnung unmittelbar oder mittelbar eine zur dynamischen Dichtzone der Dichtungsanordnung hin gerichtete Spülströmung des auf der Hochdruckseite im Dichtspalt angeordneten Fluids erzeugt. Das Strömungselement erzeugt im Fluid eine Druckdifferenz. Durch diese Druckdifferenz wird das Fluid entweder unmittelbar zur dynamischen Dichtzone der Dichtungsanordnung hin oder von der Dichtzone wegbeschleunigt. Im letztgenannten Fall wird die Dichtzone durch zur Dichtzone nachströmendes Fluid angeströmt. Im Falle einer rotatorischen Relativbewegung der beiden Maschinenteile dreht sich entweder das Dichtungselement gemeinsam mit dem die Dichtungshaltestruktur aufweisenden Maschinenteil relativ zur Dichtfläche oder das die Dichtfläche aufweisende Maschinenteil dreht sich relativ zum Dichtungselement. Im letztgenannten Fall wird das Fluid durch dessen Reibung an der Dichtfläche sowie seine ihm innewohnende Viskosität in eine um die Rotationsachse der Dichtfläche gerichtete Strömung versetzt (sogenannte Taylor-Couette-Strömung). Ist das die Dichtfläche aufweisende Maschinenteil - bezogen auf die Bewegungsachse der beiden Maschinenteile - das in radialer Richtung innenliegende und in Rotation versetzte Maschinenteil, so drängt das an dem die Dichtfläche aufweisenden Maschinenteil beschleunigte Fluid bei höheren Rotationsgeschwindigkeiten durch die Zentrifugalkraft zusätzlich nach außen. Dadurch entstehen sogenannte Taylor-Wirbel, die senkrecht zur Bewegungsachse der beiden Maschinenteile stehen und eine Durchmischung des Fluids bewirken. Der Dichtkopf weist eine im Querschnitt konvex ausgeformte Stirnseite auf, die der Dichtfläche zuweist. Der Dichtkopf ist dadurch dichtflächenseitig ballig ausgeformt. Dadurch ist zwischen dem Dichtkopf und der Dichtfläche ein hochdruckseitiger Fluidraum definiert, der sich zur Dichtzone hin in seinem freien, d. h. vom Fluid durchströmbaren, Querschnitt verjüngt. Dadurch kann insgesamt ein für die Kühlung, Schmierung und das Spülen der dynamischen Dichtzone verbesserte Strömungsführung des Fluids zur Dichtzone hin erreicht werden. Dies ist auch für das Ablösen bereits entstandener Ölkohleablagerungen im Bereich der Dichtzone bzw. zur Verhinderung der Entstehung einer solchen von Vorteil. Der Dichtabschnitt des Dichtkopfs umfasst nach der Erfindung zumindest einen Laufstreifen, der sich stirnseitig vom Dichtkopf wegerstreckt. Dieser Laufstreifen steht somit über die Kontur der Stirnseite des Dichtkopfs hervor. Der Laufstreifen kann im unbelasteten Zustand gerundet, d. h. mit einem Radius, ausgeführt sein oder aber beiderseitig Dichtkanten aufweisen. Der Dichtstreifen ist nach der Erfindung mit einer durchgehenden, vorzugsweise makroskopisch unstrukturierten, Lauffläche versehen.

Das Strömungselement wird bei einer Relativbewegung der beiden Maschinenteile um die Bewegungsachse vom Fluid angeströmt und erzeugt im Fluid eine Strömung, die im Falle eines radial dichtenden Dichtungselements in axialer Richtung und im Falle eines axialdichtenden Dichtungselements in radialer Richtung (jeweils bezogen auf die Bewegungsachse der beiden Maschinenteile) zum Dichtabschnitt des Dichtkopfs hin oder aber von dem Dichtabschnitt weggerichtet ist. Im erstgenannten Fall wird der Dichtabschnitt bzw. die Dichtzone von dem durch das Strömungselement zum Dichtabschnitt des Dichtelements gelenkte Fluid angeströmt. Im letztgenannten Fall wird der Dichtabschnitt bzw. die Dichtzone von zur Dichtzone nachströmendem Fluid angeströmt.

Insgesamt kann dadurch eine nochmals weiter verbesserte Schmierung, Kühlung und zusätzlich eine aktive Spülung im Bereich des an der Dichtfläche anliegenden Dichtabschnitts des Dichtkopfs bzw. der Dichtzone erreicht werden. Der Entstehung und Ablagerung von Ölkohle am bzw. Einlagerung von Ölkohle in den Dichtabschnitt des Dichtungselements kann dadurch wirksam entgegengewirkt werden. Bereits entstandene und ggf. am Dichtabschnitt des Dichtungselements angelagerte Ölkohle kann ggf. sogar vom Fluid aus der Dichtzone aktiv herausgespült werden.

Das Strömungselement kann nach der Erfindung insbesondere als eine Nut des Dichtungselements ausgebildet sein. Eine solche Nut kann bei den in der Dichtungsherstellung eingesetzten Urformverfahren, insbesondere im Wege des Spritzgießens, einfach und kostengünstig erzeugt werden. Nach einer alternativen Ausführungsform der Erfindung kann das Strömungselement auch als eine Durchgangsbohrung des Dichtungselements bzw. Dichtungskopfs, ausgeführt sein.

Die vorgenannte Nut bzw. die Durchgangsbohrung des Dichtkopfs sind zur Bewegungsrichtung der beiden Maschinenteile vorzugsweise zumindest bereichsweise schräg verlaufend ausgebildet bzw. angeordnet. Die vorgenannte Nut bzw. die Durchgangsbohrung sind nach der Erfindung beidenends offen ausgeführt.

Für einen besonders effizienten Spüleffekt im Bereich der Dichtzone kann sich die Nut bzw. die Durchgangsbohrung nach der Erfindung von der Hochdruckseite in Richtung auf die Niederdruckseite bzw. den Dichtabschnitt des Dichtkopfs zumindest abschnittsweise in ihrem vom Fluid durchströmbaren Querschnitt verjüngen. Dadurch kann die Nut im Sinne einer Düse wirken und das Fluid in Richtung auf den Dichtabschnitt nochmals wirksamer beschleunigen. Das Fluid kann dadurch über die Nut dem Dichtabschnitt mit einer großen Strömungsgeschwindigkeit zugeführt werden. Insgesamt kann dadurch der erwünschte Spüleffekt des Fluids nochmals weiter gesteigert werden, so dass bereits entstandene Ölkohle nochmals wirksamer vom Dichtabschnitt bzw. der Dichtfläche abgelöst und aus dem Dichtbereich entfernt werden kann.

Die Nut oder die Durchgangsbohrung sind dichtabschnittsseitig mit einem ringförmigen Strömungskanal, bevorzugt in Form einer stirnseitigen Umfangsnut, des Dichtkopfs fluidisch verbunden, d. h. münden in diesen ringförmigen Strömungskanal des Dichtkopfs. Dadurch kann der Dichtabschnitt in Umfangsrichtung vollständig auf der Hochdruckseite vom Fluid umspült werden. Dies ist für die Wärmeabfuhr im Bereich der Dichtzone von Vorteil. Auch wird dadurch eine nochmals weiter optimierte Spülung der Dichtzone erreicht. Der ringförmige Strömungskanal ist vorteilhaft (zur Niederdruckseite hin) durch den an der Dichtfläche anliegenden Dichtabschnitt des Dichtkopfs seitlich unmittelbar begrenzt.

Nach einer alternativen Ausführungsform der Erfindung erstreckt sich das Strömungselement des Dichtkopfs vom Dichtkopf weg. Das Strömungselement ist somit im Sinne eines Profilfortsatzes des Dichtkopfs ausgeführt. Das Strömungselement ist dabei unter fertigungstechnischen Aspekten vorzugsweise am Dichtkopf unmittelbar angeformt. Dadurch ist das Strömungselement zugleich verliersicher am Dichtungskopf gehalten angeordnet. Das Strömungselement wirkt im Sinne einer Beschaufelung (Schaufel) des Dichtkopfs. Das Strömungselement kann dabei eine ovale, elliptische, polygonale, oder dreieckige Querschnittsform aufweisen. Auch eine Freiform-Querschnittsform im Sinne eines Flügelprofils ist denkbar. Die (Schub-)Wirkung des als Profilfortsatz des Dichtungselements ausgebildeten Strömungselements ist durch eine entsprechende Bemaßung sowie Ausformung der vom Fluid anströmbaren bzw. im Betriebseinsatz angeströmten Fläche(n) des Strömungselements dem Bedarf entsprechend einstellbar. Durch eine geeignete Wahl der Steigung der Anströmfläche(n) des Strömungselements relativ zur Bewegungsachse bzw. relativ zum lokalen Radius des Dichtungselements sowie einer möglichen Neigung der Anströmfläche(n) des Strömungselements kann Beschleunigung des Fluids durch das Strömungselement beeinflusst werden. Das Strömungselement kann auch, insbesondere bei rotatorisch bewegbaren Maschinenteilen, bidirektional wirkend ausgebildet sein, d. h. in beiden Bewegungsrichtung der Maschinenteile relativ zueinander einen entlang des Dichtspalts gerichteten Fluidstrom bewirken.

Das Strömungselement kann erfindungsgemäß abschnittsweise umfangsseitig am Dichtkopf und/oder zumindest abschnittsweise an einer Seitenflanke des Dichtkopfs angeordnet sein.

Die Schmierung und Kühlung des Dichtabschnitts des Dichtungselements kann erfindungsgemäß dadurch nochmals weiter verbessert werden, dass das Dichtungselement mit einer Vielzahl von Strömungselementen versehen ist. Dadurch kann zugleich der Entstehung und Ablagerung/Einlagerung von Ölkohle am Dichtabschnitt des Dichtungselements nochmals wirksamer entgegengewirkt werden. So können insbesondere ein oder mehrere nutförmige und/oder ein oder mehrere vom Dichtungselement wegstehende Strömungselemente miteinander kombiniert am Dichtungskopf angeordnet sein. Das bzw. die nutförmige(n) Strömungselement können beispielsweise an der der Dichtfläche zuweisenden Stirnseite des Dichtkopfs und das bzw. die vom Dichtkopf wegstehende(n) Strömungselement(e) an einer Seitenflanke des Dichtungselements bzw. des Dichtkopfs angeordnet sein. Insbesondere durch die vom Dichtkopf wegstehenden Strömungselemente kann zugleich eine unter thermischen Aspekten vorteilhafte Durchmischung des Fluids erreicht werden. Sofern durch die Strömungselemente turbulente Strömungsbereiche innerhalb des Fluids bewirkt sind, können zudem größere partikuläre Verunreinigungen (beispielsweise Ölkohleagglomerate) zerkleinert und im Fluid aufgeschlämmt werden. Das Risiko einer Beschädigung des Dichtkopfs bzw. der Dichtfläche (Riefenbildung) kann dadurch nochmals weiter minimiert werden.

Die Mehrzahl von Strömungselementen kann in Umfangsrichtung des Dichtungselements einreihig oder auch mehrreihig am Dichtkopf angeordnet sein. Nach einer besonders bevorzugten Ausführungsform können die Strömungselemente zumindest teilweise entlang einer schrauben- oder spiralförmigen Linie hintereinander aufgereiht am Dichtkopf angeordnet sein. Die in dieser Weise angeordneten Dichtungselemente können dadurch besonders effektiv zusammenwirken. Dadurch kann selbst bei kompakten Abmessungen der einzelnen Strömungselemente hochdruckseitig des Dichtungselements eine funktionell ausreichend große Fluidströmung erreicht werden.

Zu beachten ist, dass das Dichtungselement niederdruckseitig Rückförderelemente aufweisen kann, die am Dichtkopf angeordnet sind. Dadurch kann von der Hochdruckseite auf die Niederdruckseite gelangtes Fluid zum Dichtabschnitt des Dichtkopfs zurückbefördert und dadurch die Schmierung, Kühlung sowie auch das Rückschleppvermögen des Dichtungselements nochmals weiter verbessert werden. Die Rückförderelemente können in einer zu den vorgenannten Strömungselementen des Dichtungselements entsprechenden Weise nutförmig oder auch als Profilfortsätze ausgeformt sein.

Das Dichtungselement kann nach der Erfindung zumindest teilweise, bevorzugt vollständig, aus einem Elastomermaterial bestehen.

Zu beachten ist darüber hinaus, das die Dichtungshaltestruktur im Hinblick auf eine weiter vereinfachte Montage der Dichtungsanordnung durch eine Kartusche gebildet sein kann. Die Kartusche kann aus Metall oder einem anderen geeigneten Werkstoff bestehen.

Nach der Erfindung können der Dichtkopf und der Fußabschnitt über einen elastisch verformbaren Verbindungsabschnitt des Dichtungselements miteinander verbunden sein, der einen nicht-linearen Querschnittsverlauf oder einen im Wesentlichen nicht-linearen Querschnittsverlauf sowie mehrere materialgeschwächte Bereiche aufweist, die in Umfangsrichtung des Dichtungselements, bevorzugt regelmäßig, voneinander beabstandet hintereinanderliegend angeordnet sind.

In dem Fall, dass das Dichtungselement - bezogen auf die Bewegungsachse der beiden Maschinenteile - radialdichtend, d. h. als ein sogenannter Radialwellendichtring oder Kolbendichtring, ausgeführt ist, weist der Verbindungsabschnitt einen in radialer Richtung nicht-linearen, d. h. gekrümmten, Querschnittsverlauf auf. In dem Fall, dass das Dichtungselement axialdichtend, d. h. als ein sogenannter Axialwellendichtring, ausgebildet ist, weist der Verbindungsabschnitt dementsprechend einen in axialer Richtung nicht-linearen, d. h. gekrümmten, Querschnittserverlauf auf. Durch einen solchen Querschnittsverlauf des elastisch, insbesondere gummielastisch, verformbaren Verbindungsabschnitts können zum einen Schwingungen des die Dichtfläche aufweisenden Maschinenteils sowie Unregelmäßigkeiten der Dichtfläche mittels des Verbindungsabschnitts zuverlässig aufgenommen bzw. kompensiert werden. Dadurch kann eine lokale Überbelastung des Dichtabschnitts bzw. der Dichtkante des Dichtkopfs vermieden und ein zuverlässiges Dichtvermögen des Dichtungselements erreicht werden. Darüber hinaus kann dadurch eine besonders kompakte Bauweise des Dichtungselements realisiert werden. Dies ist für die mögliche Einsatzbreite der Dichtungsanordnung vorteilhaft. Bildet der Verbindungsabschnitt einen zur Hochdruckseite hin offenen Freiraum, so kann das Dichtungselement durch eine hochdruckseitige Druckbeaufschlagung der Dichtungsanordnung druckaktiviert werden. Der Dichtkopf wird mit anderen Worten druckproportional zu einem auf der Hochdruckseite herrschenden Betriebsdruck gegen die Dichtfläche gepresst. Der Verbindungsabschnitt weist dazu vorteilhaft (zumindest abschnittsweise) einen bügel- bzw. mäanderförmigen, d. h. U- oder V-förmigen, Querschnittsverlauf auf.

Durch die in Umfangsrichtung des Dichtungselements vorgesehenen Materialschwächungen des elastisch, bevorzugt gummielastisch, verformbaren Verbindungsabschnitts kann zudem eine besonders effiziente Schmierung und damit Kühlung der Dichtzone, d. h. der Kontaktzone des Dichtungsabschnitts und der Dichtfläche, erreicht werden. Dadurch wird der Entstehung von Ölkohle im Bereich der dynamischen Dichtzone der Dichtungsanordnung entgegengewirkt. Die Materialschwächungen des Verbindungsabschnitts bieten dem Dichtkopf im Betrieb der Dichtungsanordnung einerseits eine geringere Momentenabstützung, als die nicht-materialgeschwächten Bereichen des Verbindungsabschnitts. Diese sind den Materialschwächungen in Umfangsrichtung des Dichtungselements zwischengeschaltet angeordnet. Bei einer Relativbewegung der beiden Maschinenteile wird dadurch an der Dichtfläche in Umfangsrichtung ein zum räumlichen Verteilungsmuster der materialgeschwächten Bereiche und der nicht-materialgeschwächten Bereiche des Verbindungsabschnitts korrespondierender Kontaktpressungsverlauf des Dichtabschnitts an der Dichtfläche bewirkt. Die in Umfangsrichtung des Dichtungselements wechselnde bzw. inkonstante Kontakt(flächen)pressung des Dichtabschnitts des Dichtkopfs ermöglicht dabei eine verbesserte Schmierung des verschleißgefährdeten Dichtabschnitts durch das auf der Hochdruckseite des Dichtspalts bzw. der Dichtungsanordnung angeordneten Fluid. Dies, ohne das Dichtverhalten des Dichtungselements dadurch negativ zu beeinflussen.

Nach der Erfindung kann die für das Dichtvermögen des Dichtungselements maßgebliche vorgespannt dichtende Anlage des Dichtkopfs an der Dichtfläche gänzlich oder teilweise durch den Verbindungsabschnitt bewirkt sein. In beiden Fällen wird also der Dichtkopf durch den Verbindungsabschnitt, der zwangsläufig über den Fußabschnitt an dem die Dichtungshaltestruktur aufweisenden Maschinenteil abgestützt ist, gegen die Dichtfläche gepresst. Der Fußabschnitt liegt dabei an dem die Dichtungshaltestruktur aufweisenden Maschinenteil in axialer oder in radialer Richtung statisch dichtend an. Durch die erfindungsgemäßen Materialschwächungen des Verbindungsabschnitts wird in beiden Fällen der zum räumlichen Verteilungsmuster der Materialschwächungen korrespondierende inkonstante/wechselnde Kontaktpressungsverlauf des Dichtabschnitts an der Dichtfläche weiter verstärkt. Der Dichtabschnitt des Dichtkopfs liegt mit denjenigen Dichtabschnitts(flächen)bereichen, die in einer zur Dichtfläche orthogonalen Richtung mit den Materialschwächungen des Verbindungsabschnitts fluchten, mit einer kleineren Kontakt(flächen)pressung an der Dichtfläche an, als mit denjenigen Bereichen, die mit den nicht-geschwächten Bereichen des Verbindungsabschnitts in einer zur Dichtfläche orthogonalen Richtung fluchten. Dadurch kann die Selbstschmierung der Dichtungsanordnung im Bereich der Dichtzone, d. h. eine ausreichende Schmierschicht im Bereich der Berührzone zwischen dem Dichtkopf und der Dichtfläche, mithin die Lebensdauer des Dichtungselements, nochmals weiter verbessert werden.

Der Verbindungsabschnitt weist nach der Erfindung in den materialgeschwächten Bereichen vorzugsweise jeweils eine Dicke auf, die weniger als 90%, insbesondere weniger als 50% der maximalen Dicke des Verbindungsabschnitts beträgt. Die materialgeschwächten Bereiche sind also keine Ausnehmungen des Verbindungsabschnitts, sondern dichten die Hochdruckseite allzeit gegenüber einem Durchtritt des Fluids auf die Niederdruckseite ab. Der Verbindungsabschnitt kann am Dichtkopf mittig oder alternativ randseitig, insbesondere am niederdruckseitigen Rand des Dichtkopfs, angeformt sein. Im erstgenannten Fall erstreckt sich somit der Dichtkopf bei einem bezüglich der Bewegungsachse radial dichtenden Dichtungselement in axialer Richtung und bei einem axial dichtenden Dichtungselement in radialer Richtung zu beiden Seiten über den Anbindungsbereich des Verbindungsabschnitts seitlich weg. Dadurch kann der Dichtabschnitt des Dichtkopfs auf einfache Weise umlaufend in einer zur Dichtfläche orthogonalen Richtung gegen die Dichtfläche gepresst werden. In beiden Fällen wird Raum für weitere Funktions- bzw. Anbauteile des Dichtungselements geschaffen.

So kann der Dichtkopf nach der Erfindung zumindest eine Haltestruktur aufweisen, in oder an der ein (gummi)elastisch verformbares Vorspannelement, insbesondere eine Wurmfeder oder ein Elastomerring, gehalten angeordnet ist, durch das der Dichtkopf gegen die Dichtfläche gespannt wird. Ein solches Vorspannelement kann nach der Erfindung zusätzlich oder alternativ zu einer durch den Verbindungsabschnitt vermittelten Vorspannung des Dichtkopfs gegen die Dichtfläche vorgesehen sein. Die Haltestruktur ist nach der Erfindung bevorzugt an seiner dem Fußabschnitt zuweisenden Rückseite des Dichtkopfs angeordnet. Unter fertigungstechnischen Aspekten sowie auch im Hinblick auf eine einfache und sichere Montage des Dichtungselements ist die Haltestruktur vorteilhaft als eine Ringnut ausgebildet. Weist der Dichtkopf nur eine solche Haltestruktur auf, so ist diese vorteilhaft auf der Hochdruckseite des Dichtkopfs positioniert. Dadurch kann nochmals zuverlässigeres Dichtvermögen des Dichtungselements gewährleistet werden.

Nach einer bevorzugten Weiterbildung der Erfindung weist der Dichtkopf, bevorzugt an seiner dem Fußabschnitt zuweisenden Rückseite, zu beiden Seiten des Verbindungsabschnitts, d. h. niederdruckseitig und hochdruckseitig, eine Haltestruktur auf.

In/an den beiden Haltestrukturen kann nach einer ersten erfindungsgemäßen Ausführungsalternative jeweils ein (gummi)elastisch verformbares Vorspannelement für den Dichtkopf, insbesondere eine Wurmfeder oder ein Elastomerring, gehalten angeordnet sein. Durch die voneinander beabstandet angeordneten Vorspannelemente kann der Dichtkopf mit seinem Dichtabschnitt besonders zuverlässig und kippstabil an die Dichtfläche angepresst werden.

Nach einer zweiten erfindungsgemäßen Ausführungsalternative kann in/an der niederdruckseitig angeordneten Haltestruktur ein Stützring und in/an der hochdruckseitigen Haltestruktur ein elastisch verformbares Vorspannelement, insbesondere eine Wurmfeder oder ein Elastomerring, gehalten angeordnet sein. Der Stützring ist im Vergleich zum Material des Dichtungselements bzw. des Dichtkopfs in sich biegesteif d. h. in radialer und in axialer Richtung formstabil. Aufgrund des elastisch verformbaren Materials des Dichtkopfs kann der Stützring den Dichtkopf in seiner Dichtposition an der Dichtfläche sichern. Angesichts des elastisch verformbaren Materials des Dichtkopfs kann der Stützring darüber hinaus bei einer entsprechenden Bemaßung im Sinne eines Vorspannelements für den Dichtkopf fungieren. Der Stützring kann darüber hinaus niederdruckseitig eine axiale bzw. radiale Abstützung des Dichtkopfs und/oder des Verbindungsabschnitts des Dichtungselements bewirken und so die Funktionsfähigkeit des Dichtungselements selbst bei hohen Betriebsdrücken des Fluids gewährleisten. Durch das auf der Hochdruckseite angeordnete Vorspannelement kann im Betriebseinsatz der Dichtungsanordnung eine ausreichende Kontaktpressung des Dichtkopfs gegen die Dichtfläche ermöglicht werden.

Für eine besonders einfache und dauerhafte Befestigung des/der vorgenannten Vorspannelements/-e bzw. des Stützrings weist die Ringnut nach der Erfindung vorzugsweise eine Öffnung mit einem im Vergleich zum Innendurchmesser der Ringnut kleineren Öffnungsquerschnitt auf. Die vorgenannten Anbauteile können dadurch bei der Montage der Dichtungsanordnung auf einfache Weise in die Ringnut eingeklipst und verliersicher an dem Dichtungselement befestigt werden.

Der Stützring kann nach einer Weiterbildung der Erfindung bedarfsweise mit einer Abstreif- bzw. Dichtlippe versehen sein, um einen Eintrag von Verschmutzungen von der Niederdruckseite auf die Hochdruckseite des Dichtspalts entgegenzuwirken. Dadurch ist die Dichtungsanordnung auch für den Einsatz in hochgradig verschmutzen Umgebungen nochmals besser geeignet. Die Abstreif- bzw. Dichtlippe liegt an dem die Dichtfläche aufweisenden Maschinenteil vorzugsweise umlaufend an. Die Abstreiflippe ist insbesondere bei zueinander translatorisch bewegbaren Maschinenteilen von Vorteil.

Der Dichtkopf kann erfindungsgemäß mit unterschiedlichen Querschnittsformen realisiert werden. So kann der Dichtkopf eine ovale, elliptische oder auch polygonale Querschnittsform aufweisen. Bevorzugt weist der Dichtkopf eine im Querschnitt konvex ausgeformte Stirnseite auf, die der Dichtfläche zuweist. Der Dichtkopf ist dadurch dichtflächenseitig ballig ausgeformt.

Das erfindungsgemäße Dichtungselement ermöglicht eine verbesserte Selbstschmierung, Selbstkühlung und wirkt im Betrieb einer Ölkohlebildung sowie Ab- bzw. Einlagerung an seinem Dichtabschnitt entgegen. Insgesamt kann das Dichtungselement dadurch insbesondere bei Hochgeschwindigkeitsanwendungen, eine größere Lebensdauer erreichen.

Nachstehend wird die Erfindung anhand eines in der Zeichnung dargestellten Ausführungsbeispiels näher erläutert. In der Zeichnung zeigen:
- Fig. 1: eine Dichtungsanordnung mit zwei zueinander um eine Bewegungsachse bewegbaren Maschinenteilen, und mit einem Dichtungselement, das an einer Dichtfläche eines der beiden Maschinenteile in radialer Richtung dynamisch dichtend anliegt, wobei das Dichtungselement einen Fußabschnitt und einen Dichtkopf aufweist, die über einen abschnittsweise bügelförmigen bzw. im Querschnitt U-förmigen elastisch verformbaren Verbindungsabschnitt miteinander verbunden sind, der in Umfangsrichtung mit mehreren Materialschwächungen versehen ist;
- Fig. 2: die Dichtungsanordnung gemäß Fig. 1 in einer anderen Schnittdarstellung, bei der der Verbindungsabschnitt des Dichtungselements in einem nicht-materialgeschwächten Bereich geschnitten dargestellt ist;
- Fig. 3: das Dichtungselement der Dichtungsanordnung gemäß Fig. 1 in einer freigestellten perspektivischen Ansicht mit Darstellung von nutförmigen Strömungselementen, durch die im Betriebseinsatz des Dichtungselements eine zum Dichtabschnitt des Dichtkopf gerichtete Strömung bewirkt ist;
- Fig. 4: einen Detailausschnitt des Dichtungselements gemäß Fig. 3;
- Fig. 5: eine zu der Dichtungsanordnung gemäß Fig. 1 ähnliche Dichtungsanordnung, bei der das Dichtungselement bezogen auf die Bewegungsachse der beiden Maschinenteile in axialer Richtung dynamisch dichtend ausgeführt ist;
- Fig. 6: eine Dichtungsanordnung, bei der die Strömungselemente teilweise als eine Durchgangsbohrung des Dichtkopfs ausgeführt sind;
- Fig. 7: eine Dichtungsanordnung, bei der der Dichtabschnitt des Dichtkopfs des Dichtungselements mit einer Laufrille versehen ist;
- Fig. 8: eine zu der Dichtungsanordnung gemäß Fig. 1 ähnliche Dichtungsanordnung, bei der der Dichtkopf teilweise oder alleinig durch zwei als Wurmfedern ausgebildete Vorspannelemente gegen die Dichtfläche vorgespannt gehalten ist;
- Fig. 9: eine zu der Fig. 8 ähnliche Dichtungsanordnung bei der der Dichtkopf des Dichtungselements hochdruckseitig durch eine als Wurmfeder ausgebildetes Vorspannelement und auf der Niederdruckseite durch einen Stützring an der Dichtfläche gehalten ist;
- Fig. 10: eine zu der Dichtungsanordnung gemäß Fig. 9 ähnliche Dichtungsanordnung, bei der der auf der Niederdruckseite angeordnete Stützring des Dichtungselements zusätzlich eine Abstreif- oder Dichtlippe aufweist, die an der Dichtfläche umlaufend anliegt;
- Fig. 11: eine alternative Ausführungsform eines Dichtungselements, das nutförmige sowie als Profilfortsätze ausgebildete Strömungselemente aufweist, in einer freigestellten perspektivischen Ansicht;
- Fig. 12: das Dichtungselement gemäß Fig. 1 in einer ausschnittsweisen Detailansicht;
- Fig. 13: eine zu dem Dichtungselement gemäß Fign. 11 und 12 ähnliches Dichtungselement, bei denen die profilfortsatzartigen Strömungselemente tetraederförmig ausgeführt sind;
- Fig. 14: das Dichtungselement gemäß Fig. 13 in einer ausschnittsweisen Detaildarstellung;
- Fig. 15: ein Dichtungselement mit trapezförmigen Strömungselementen, in einer ausschnittsweisen Detaildarstellung;
- Fig. 16: ein zu dem in Fig. 15 dargestellten Dichtungselement ähnliches Dichtungselement, in einer ausschnittsweisen Detaildarstellung; und
- Fig. 17: ein Dichtungselement mit zylinderförmigen zweiten Strömungselementen, in einer ausschnittsweisen Detaildarstellung.

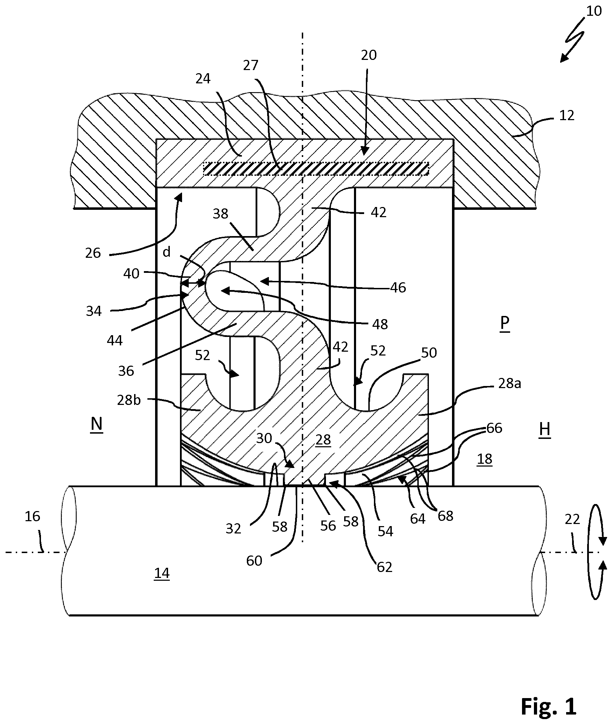

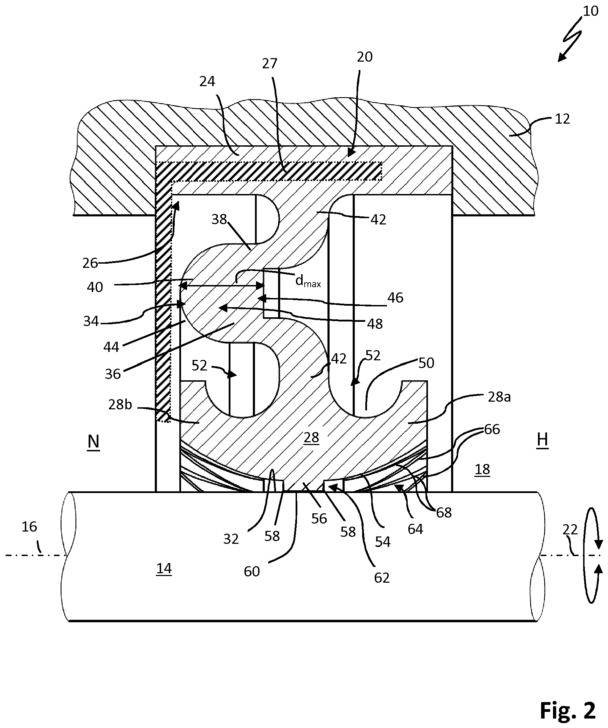

In den **Fig. 1** und **2** ist eine Dichtungsanordnung **10** mit einem ersten und einem zweiten Maschinenteil **12, 14** gezeigt, die um eine mit **16** bezeichnete Bewegungsachse relativ zueinander bewegbar, hier rotierbar, angeordnet sind. Zwischen den beiden Maschinenteilen 12, 14 ist ein Dichtspalt **18** ausgebildet. Der Dichtspalt weist eine abzudichtende Hochdruckseite **H** auf, in der ein mit einem Druck **P** beaufschlagbares Fluid, insbesondere ein Schmierstoff, wie beispielsweise Öl, angeordnet ist. Die Hochdruckseite H ist mittels eines Dichtungselements **20** gegenüber einer Niederdruckseite **N** des Dichtspalts, abgedichtet. Das Dichtungselement 20 ist hier als ein sogenannter Radialwellendichtring ausgebildet.

Das Dichtungselement 20 kann insgesamt aus einem elastisch verformbaren Material, bevorzugt einem Elastomer, bestehen und ist vorzugsweise einstückig ausgeführt. Die Mittelachse des Dichtungselements 20 ist mit **22** bezeichnet. Die Mittelachse des Dichtungselements fällt hier mit der Bewegungsachse 16 der beiden Maschinenteile 12, 14 zusammen. Ein Fußabschnitt **24** des Dichtelements 20 ist an einer Dichtungshaltestruktur, hier einer Haltenut **26,** des ersten Maschinenteils 12 gehalten angeordnet. Die Nut kann auch in axialer Richtung einenends offen ausgeführt sein. Der Fußabschnitt 22 kann am ersten Maschinenteil 12 in radialer und/oder in axialer Richtung statisch dichtend anliegen. Der Fußabschnitt 24 ist hier in der Dichtungshaltestruktur geklemmt gehalten angeordnet. Der Fußabschnitt 24 kann auch auf andere dem Fachmann geläufige Weise an dem die Dichtungshaltestruktur aufweisenden Maschinenteil 12, 14 befestigt, beispielsweise mit diesem verstiftet, verklebt oder verpresst sein. Es versteht sich, dass in das Material des Dichtungselements 20 Stütz- oder Armierungsteile **27** teilweise bzw. vollständig eingebettet sein können. Durch solche Armierungsteile kann das Dichtungselement 20 beispielsweise in einer als axial einseitig offene Haltenut 26 ausgebildeten Dichtungshaltestruktur im Presssitz gehalten angeordnet sein. Auch kann ein solches Stützteil gemäß der Darstellung in Fig. 2 L-förmig ausgeführt sein, um so etwa das Dichtungselement 20 ohne Haltenut 26 an der Dichtungshaltestruktur des ersten Maschinenteils 12 festzusetzen. Ein solches Stützteil kann vorteilhaft als ein niederdruckseitiger Anschlag für das Dichtungselement 20 dienen.

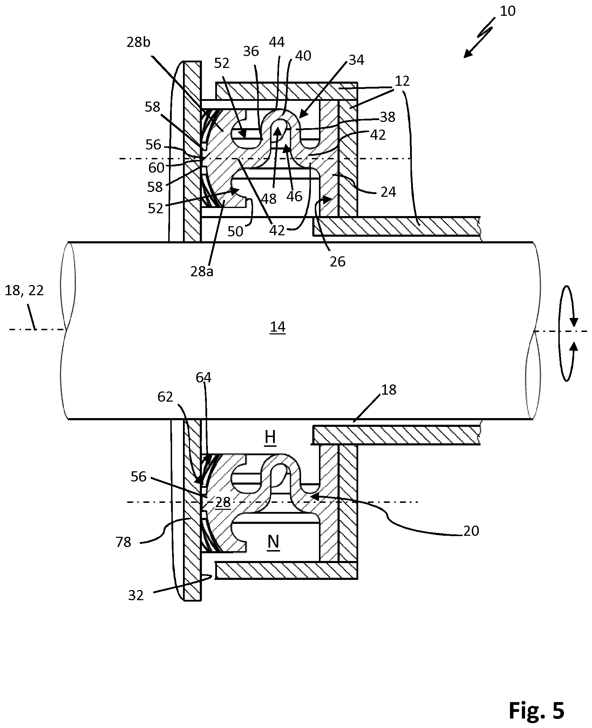

Das Dichtungselement 20 weist weiter einen Dichtkopf **28** auf, welcher mit einem Dichtabschnitt **30** an einer Dichtfläche **32** des zweiten Maschinenteils 14 umlaufend dynamisch dichtend anliegt. Zu beachten ist, dass das als Radialwellendichtring ausgebildete Dichtungselement 20 gemäß Fig. 1 innendichtend oder aber außendichtend ausgeführt sein kann. Der Dichtkopf liegt dabei in einer zur Bewegungsachse radialen Richtung an der Dichtfläche 32 des zweiten Maschinenteils 14 dichtend an. Es versteht sich, dass das Dichtungselement 20 bezogen auf die Bewegungsachse 16 der beiden Maschinenteile 12, 14 auch axial dichtend ausgebildet sein kann, wie dies weiter unten im Zusammenhang mit Fig. 5 näher erläutert ist.

Der Dichtkopf 28 und der Fußabschnitt 24 sind hier beispielhaft über einen gummielastisch verformbaren Verbindungsabschnitt **34** miteinander verbunden. Der Verbindungabschnitt 34 ist mäander- bzw. bügelförmig ausgeführt und weist mithin abschnittsweise einen U-förmigen Querschnittsform auf. Ein erster und ein zweiter Schenkel **36, 38** des Verbindungsabschnitts erstrecken sich hier jeweils parallel oder im Wesentlichen parallel zur Dichtfläche 32 und sind über einen Rückenabschnitt **40** des Verbindungsabschnitts 34 miteinander verbunden. Die beiden Schenkel 36, 38 weisen jeweils ein abgewinkeltes Endstück **42** auf, das sich hier in einer zur Bewegungsachse radialen Richtung, d. h. in einer zur Dichtfläche 32 orthogonalen Richtung, erstreckt und das am Fußabschnitt 24 bzw. am Dichtkopf 28 angeformt ist. Der Rückenabschnitt 40 kann eine konvex ausgeführten Außenseite **44** aufweisen, die zur Niederdruckseite weist. Bei dem hier gezeigten radial dichtenden Dichtungselement 20 weist der Verbindungsabschnitt 34 somit in einer zur Bewegungsachse 16 radialen Richtung einen nicht-linearen Querschnittsverlauf auf. Im Falle eines axial dichtenden Dichtungselements wiest der Verbindungsabschnitt dementsprechend einen in axialer Richtung nicht-linearen Querschnittsverlauf auf. Durch den Verbindungsabschnitt 34 kann zumindest teilweise oder, wie dies hier der Fall ist, auch alleinig die vorgespannt dichtende Anlage des Dichtkopfs 28 an der Dichtfläche 32 bewirkt sein. Der Dichtkopf 28 wird somit bei dem gezeigten Ausführungsbeispiel alleinig durch das dem Material des Verbindungsabschnitt 34 innenwohnende elastische Rückstellvermögen gegen die Dichtfläche 32 vorgespannt. Durch den membranartig ausgeführten Verbindungsabschnitt 34 ist der Dichtkopf 28 in einer zur Bewegungsachse radialen Richtung schwimmend gelagert. Dadurch kann das Dichtungselement 20 eine Exzentrizität des zweiten Maschinenteils 14 kompensieren, ohne dass es zu einer lokalen Überbeanspruchung des Dichtabschnitts 30 kommt. Zu beachten ist, dass aufgrund des bügel- bzw. mäanderförmigen Verbindungsabschnitts zwischen den Schenkeln des Verbindungsabschnitts 34 ein ringförmiger Freiraum **46** gebildet ist. Unter einem Freiraum wird ein Raumvolumen verstanden, in dem kein Bauteil der Dichtungsanordnung angeordnet ist. Dieser Freiraum 46 umgreift den Dichtkopf umfangsseitig. Der Freiraum 46 ist in einer zur Dichtfläche 32 orthogonalen Richtung alleinig durch die beiden Schenkel 36, 38 des Verbindungsabschnitts 34 unmittelbar begrenzt und mit der Hochruckseite H der Dichtungsanordnung 10 fluidisch verbunden. Wird die Hochdruckseite H und damit auch der Freiraum 46 mit einem Druck P beaufschlagt, so kann der Dichtkopf dadurch druckproportional zu dem auf der Hochdruckseite H jeweils herrschenden Druck P gegen die Dichtfläche 32 gepresst werden. Das Dichtungselement 20 ist dadurch insgesamt druckaktivierbar.

Der Verbindungsabschnitt 34 weist mehrere materialgeschwächte Bereiche **48** auf, die in Umfangsrichtung des Dichtungselements 20, bevorzugt regelmäßig, voneinander beabstandet hintereinanderliegend angeordnet sind. In Fig. 1 ist das Dichtungselement 20 auf Höhe eines solchen materialgeschwächten Bereichs 48 geschnitten dargestellt. Fig. 2 zeigt das Dichtungselement 20 in einer anderen Schnittebene, bei der kein materialgeschwächter Bereich 48 des Verbindungsabschnitts 34 geschnitten ist. Die materialgeschwächten Bereiche 48 können gemäß Fig. 1 (hier in radialer Richtung) auf Höhe des Rückenabschnitts 40 angeordnet sein bzw. zur Dichtungshaltestruktur bzw. zur Dichtfläche 32 hin versetzt angeordnet sein.

Der Verbindungsabschnitt 34 weist in den materialgeschwächten Bereichen jeweils eine Dicke **d** auf, die weniger als 90 %, bevorzugt weniger als 50% der Maximaldicke dₘₐₓ des Verbindungsabschnitts 34 in dessen ungeschwächten Bereichen beträgt. Zu beachten ist, dass der Verbindungsabschnitt 34 frei von Durchgangsausnehmungen oder dergleichen ist. Der Verbindungsabschnitt 34 ist mithin insgesamt fluidundurchlässig.

Der Verbindungsabschnitt 34 ist gemäß den Figuren 1 und 2 am Dichtkopf 28 mittig angeformt. Der Dichtungskopf 28 weist dadurch eine hochdruckseitige und eine niederdruckseitig angeordnete Kopfhälfte **28a, 28b** auf. Der Dichtkopf 28 weist ferner an seiner dem Fußabschnitt 24 zuweisenden Rückseite **50** zu beiden Seiten des Verbindungsabschnitts 34, d. h. niederdruckseitig und hochdruckseitig, eine Haltestruktur auf. Die Haltestruktur kann jeweils als eine umlaufende Ringnut **52** ausgeführt sein, die der Aufnahme weiterer möglicher Anbauteile dient, auf die nachstehend noch im Detail eingegangen wird.

Der Dichtkopf 28 weist eine insgesamt ballige Querschnittsform mit einer - hier konvex ausgeformten - Stirnseite **54** auf. Der Dichtabschnitt 30 umfasst hier einen ringförmigen Laufstreifen **56.** Der Laufstreifen 56 erstreckt sich von der Stirnseite 54 des Dichtkopfs 28 in Richtung auf die Dichtfläche 32 weg. Der Laufstreifen kann eine rechteckige Querschnittsform mit zwei Dichtkanten **58** aufweisen, wie dies in den Figuren 1 und 2 gezeigt ist. Zu beachten ist, dass der Laufstreifen eine durchgehende ringförmige Lauffläche **60** aufweist, die an der Dichtfläche 32 anliegt. Die Lauffläche 60 ist dabei vorzugsweise makroskopisch unstrukturiert ausgeführt.

Für eine aktive Kühlung, Schmierung und Spülung der mit **62** bezeichneten Dichtzone der Dichtungsanordnung 10 ist die Stirnseite 54 des Dichtungselements hochdruckseitig mit einem Profilsystem **64** versehen. Das Profilsystem umfasst hier eine Vielzahl von ersten und zweiten Strömungselementen **66, 68.** Durch diese ersten und zweiten Strömungselemente 64, 66 ist bei einer Relativbewegung der beiden Maschinenteile um die Bewegungsachse 16 - bidirektional - eine Fluidströmung auf der Hochdruckseite H des Dichtspalts 18 bewirkt, durch die der Dichtkopf 28 hochdruckseitig im Bereich der Dichtzone 62 von dem Fluid angeströmt wird.

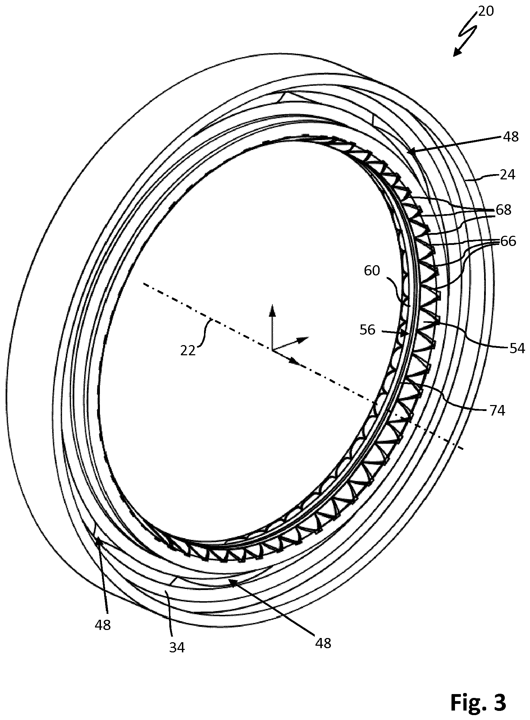

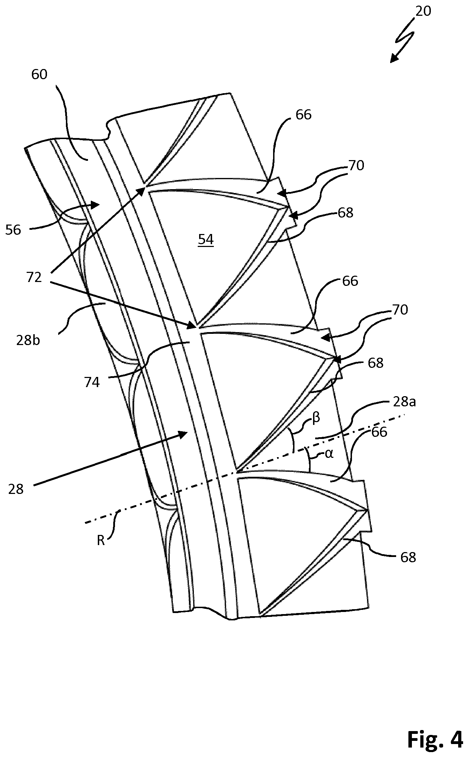

**Fig. 3** zeigt das Dichtungselement der Dichtungsanordnung gemäß den Figuren 1 und 2 in einer freigestellten Ansicht. In **Fig. 4** ist ein Detailausschnitt des Dichtungselements 20 gezeigt. Die ersten und zweiten Strömungselemente 66, 68 sind hier beispielhaft jeweils als eine Profilrille oder Nut des Dichtkopfs 28 ausgebildet. Die ersten Strömungselemente 66 sind hier beispielhaft in Umfangsrichtung des Dichtungselements 20 voneinander beabstandet hintereinanderliegend am Dichtkopf 28 angeordnet. Die ersten Strömungselemente 66 sind dabei relativ zur (lokalen) Radialrichtung R des jeweiligen Strömungselements jeweils zu einer ersten Seite hin geneigt verlaufend angeordnet. Die ersten Strömungselemente schließen mit der (lokalen) Radialrichtung jeweils einen Winkel **α** von hier ungefähr 20° ein. Die zweiten Strömungselemente 68 sind ebenfalls in Umfangsrichtung des Dichtungselements 20 voneinander beabstandet hintereinanderliegend am Dichtkopf 28 angeordnet. Die zweiten Strömungselemente 68 sind dabei relativ zur (lokalen) Radialrichtung R des jeweiligen zweiten Strömungselements 68 jeweils zu einer zweiten Seite hin geneigt verlaufend angeordnet. Die zweiten Strömungselemente 68 schließen mit der (lokalen) Radialrichtung jeweils einen Winkel β von hier ungefähr 20° ein. Die vorgenannten Winkel α und β können zwischen 15° und 45°, insbesondere zwischen 20° und 40° betragen. Es versteht sich, dass die ersten Strömungselemente 66 zumindest teilweise auch mit unterschiedlichen Winkeln α zur lokalen Radialrichtung R geneigt verlaufend angeordnet sein können. Entsprechendes gilt auch für die zweiten Strömungselemente 68.

Die ersten und zweiten nutförmigen Strömungselemente 66, 68 weisen jeweils eine hochdruckseitige erste Öffnung **70** und eine der Niederdruckseite zuweisende zweite Öffnung **72** auf. Die nutförmigen ersten und zweiten Strömungselemente 66, 68 erstrecken sich hier jeweils in einer zur Bewegungsachse 16 (Fign. 1 und 2) axialen Richtung in Richtung auf die Niederdruckseite N bzw. in Richtung auf den Dichtabschnitt 30 des Dichtungselements 20, mithin in Richtung auf die Dichtzone 62. Die Nuten können dabei in einen ringförmigen Strömungskanal in Form einer stirnseitigen Umfangsnut **74** des Dichtkopfs 28 münden. Die stirnseitige Umfangsnut 77 ist hier zur Niederdruckseite N hin durch den Laufstreifen 56 unmittelbar begrenzt. Zu beachten ist, dass die Stirnseite 54 des Dichtkopfs in dem ihrem die ersten und zweiten Strömungselemente 64, 66 aufweisenden Bereich von der Dichtfläche 32 beabstandet angeordnet ist.

Die nutförmig ausgeführten ersten und zweiten Strömungselemente 66, 68 können sich in ihrem vom Fluid durchströmbaren Querschnitt jeweils in Richtung auf den Dichtabschnitt 30 des Dichtkopfs 28 verjüngen. Diese Querschnittsverjüngung kann durch eine Reduktion der jeweiligen Breite und/oder der jeweiligen Tiefe der Nuten längs ihres Verlauf in Richtung auf den Dichtabschnitt 30 des Dichtkopfs 28 erreicht werden.

Im Betriebseinsatz der Dichtungsanordnung 10 dreht sich entweder das Dichtungselement 20 mit dem die Dichtungshaltestruktur aufweisenden Maschinenteil 12, 14 relativ zur Dichtfläche 32 oder das die Dichtfläche 32 aufweisende Maschinenteil 12, 14 dreht sich relativ zum Dichtungselement 20.

Im erstgenannten Fall wird das Fluid drehrichtungsabhängig in axialer Richtung über die ersten oder über die zweiten nutförmigen Strömungselemente 66, 68 zur Dichtzone 62 und somit zum Dichtabschnitt 30 befördert. Im letztgenannten Fall wird das Fluid durch dessen Reibung an der Dichtfläche 32 sowie seine ihm innewohnende Viskosität in eine um die Bewegungsachse 16 gerichtete Strömung versetzt (Taylor-Couette-Strömung).

Die ersten/zweiten Strömungselemente 66, 68 werden somit bei einer Relativbewegung der beiden Maschinenteile 12, 14 um die Bewegungsachse 16 vom Fluid angeströmt und erzeugen im Fluid eine Strömung, die bei dem gezeigten radialdichtenden Dichtungselement - bezogen auf Bewegungsachse - in axialer Richtung zum Dichtabschnitts 30 des Dichtkopfs 28 hingerichtet ist. Durch das Anströmen des Dichtabschnitts 30 bzw. das Spülen der Dichtzone 62 mit dem Fluid kann eine verbesserte Schmierung, Kühlung und Reinigung der Dichtzone 62 erreicht werden. Dadurch kann der Entstehung und Ablagerung von Ölkohle am bzw. Einlagerung von Ölkohle in den Dichtabschnitt 30 des Dichtungselements 20 entgegengewirkt werden. Bereits entstandene und ggf. am Dichtabschnitt 30 des Dichtungselements angelagerte Ölkohle kann vom Fluid weggespült werden.

Der Dichtkopf kann auf der Niederdruckseite N Rückförderprofile **76** aufweisen, durch die einerseits das Rückschleppvermögen der Dichtungsanordnung 10 und andererseits von der Niederdruckseite N her eine zusätzliche Schmierung der des an der Dichtfläche 32 anliegenden Dichtabschnitts 30 des Dichtkopfs 28 erreicht werden kann. Die Rückförderprofile 76 können dabei in einer zu den auf der Hochdruckseite H des Dichtungselements 20 angeordneten ersten und zweiten Strömungselementen 66, 68 entsprechenden Weise ausgebildet sein.

Nach einer alternativen Ausführungsform der Dichtungsanordnung 10 ist diese mit einem axialdichtenden Dichtungselement 20, d. h. einem Axialwellendichtring, versehen. In diesem Fall kann die Dichtfläche 32 gemäß **Fig. 5** ringscheibenförmig ausgeführt und etwa durch einen Ringkragen **78** des zweiten Maschinenteils 14 gebildet sein. Der Ringkragen 78 kann am zweiten Maschinenteil 14 angeformt, angeschweißt oder mit diesem verklebt sein.

Der Dichtabschnitt 30 des Dichtkopfs 28 liegt bei einer solchen Bauweise der Dichtungsanordnung 10 in einer zur Bewegungsachse 16 axialen Richtung an der Dichtfläche 32 vorgespannt dichtend an. Der Verbindungsabschnitt erstreckt sich mithin in einer axialen Richtung vom Dichtkopf 28 bis zum Fußabschnitt 24 des Dichtungselements 20 und weist in axialer Richtung einen nicht-linearen Querschnittsverlauf auf. Die ersten und die zweiten Strömungselemente 66, 68 sind auf der Hochdruckseite des Dichtkopfs 28 angeordnet.

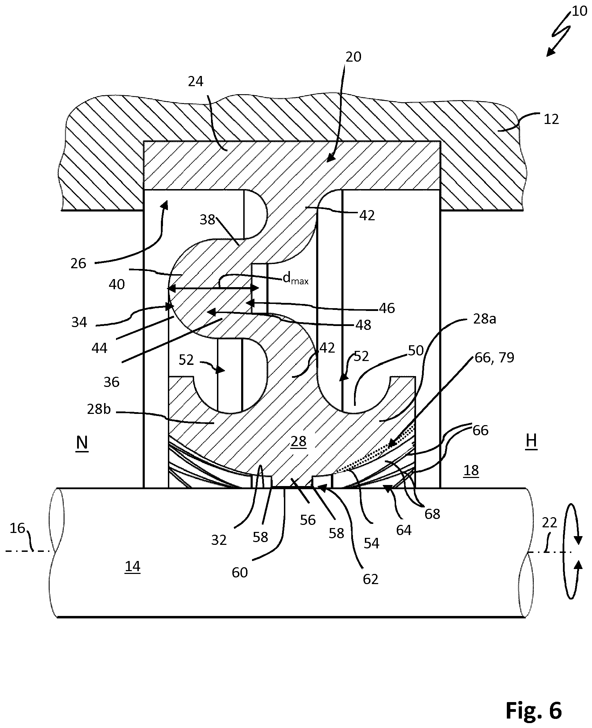

Die ersten und/oder die zweiten Strömungselemente 66, 68 des Dichtkopfs 28 der vorstehend erläuterten Dichtungsanordnungen 10 können auch zumindest abschnittsweise als Durchgangsbohrungen **79** des Dichtkopfs 28 ausgeführt sein, wie dies bei dem in **Fig.** 6 gezeigten Ausführungsbeispiel mit gestrichelter Linie dargestellt ist.

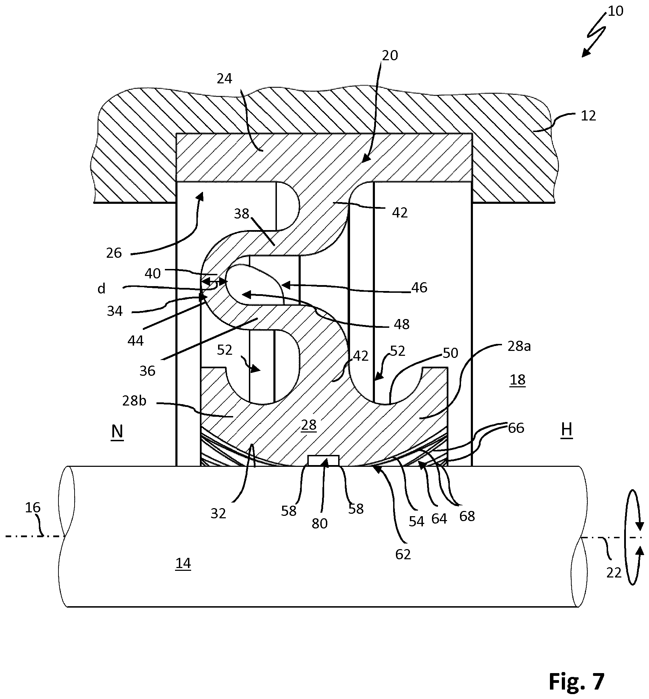

Gemäß einer alternativen Weiterbildung kann das Dichtungselement 10 im Bereich seines Dichtabschnitts 30 anstelle des Laufstreifens gemäß **Fig. 7** auch zumindest eine ringförmige Laufrille oder Profilnut **80** bzw. mehrere zueinander parallel verlaufende ringförmige Profilnuten 80 aufweisen. Dadurch können zu beiden Seiten der Profilnut 80 jeweils eine scharfkantige oder bedarfsweise auch eine gerundete Dichtkante am Dichtkopf realisiert werden. Die Laufrille bzw. Profilnut 80 stellt eine Vertiefung der Stirnseite 54 des Dichtkopfs dar. Die in Fig. 7 nicht näher bezeichneten Nutflanken der Profilnut 80 sind über Dichtkanten 58 mit der Stirnseite (bzw. deren Oberfläche) verbunden.

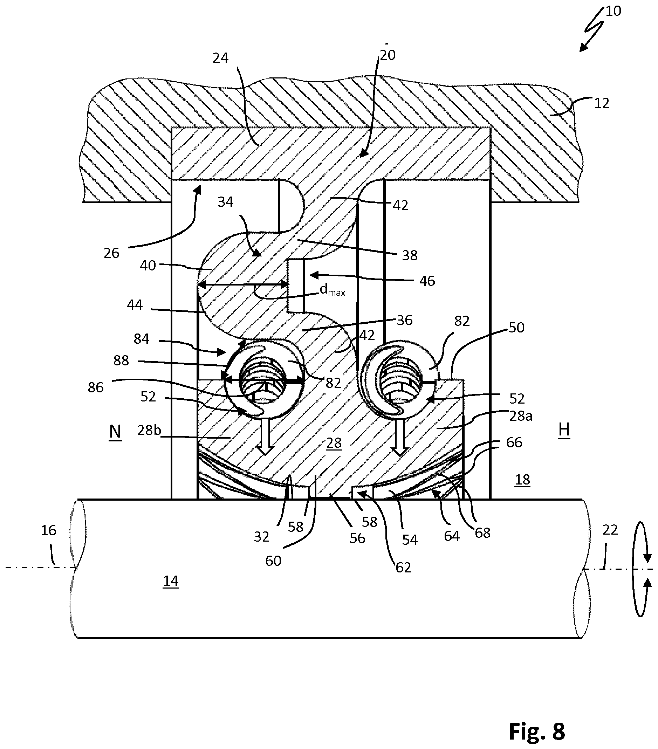

**Fig. 8** zeigt eine Dichtungsanordnung 10, bei der der Dichtkopf 28 mittels zweier elastisch verformbarer Vorspannelemente **82** gegen die Dichtfläche 32 des zweiten Maschinenteils 14 gespannt ist. Diese Vorspannung kann der vorstehend erläuterten Vorspannfunktion des Verbindungsabschnitts 34 überlagert sein, oder eine solche Vorspannfunktion des Verbindungsabschnitts 34 vollständig ersetzten. Die beiden Vorspannelemente 82 sind jeweils als zum Dichtungselement 20 separate Bauteile ausgeführt und zu beiden Seiten des Verbindungsabschnitts 34, d. h. niederdruckseitig und hochdruckseitig, in einer der rückseitigen Ringnuten 52 des Dichtkopfs 28 gehalten angeordnet. Die Ringnuten 52 können hierzu jeweils eine Öffnung **84** mit einer im Vergleich zum Innendurchmesser **86** der jeweiligen Ringnut 52 kleineren Öffnungsweite **88** aufweisen. Die Vorspannelemente 82 sind dadurch während des Betriebs der Dichtungsanordnung 10 verliersicher am Dichtungselement 20 gehalten. Die Vorspannelemente 82 können gemäß Fig. 8 insbesondere in Form einer Wurmfeder ausgeführt sein. Aufgrund der in Umfangsrichtung des Dichtungselements unterschiedlichen Momenten-Aufnahmevermögens des Verbindungsabschnitts 34 in dessen materialgeschwächten Bereichen 48 und dessen nicht-materialgeschwächten Bereichen wird im Betrieb der Dichtungsanordnung 10 in Umfangsrichtung des Dichtungselements 20 ein Kontaktpressungsverlauf des Dichtabschnitts 30 an der Dichtfläche 32 des zweiten Maschinenteils 14 erreicht. Dadurch kann die Schmierung und somit auch die Lebensdauer des Dichtungselements 20 verbessert werden.

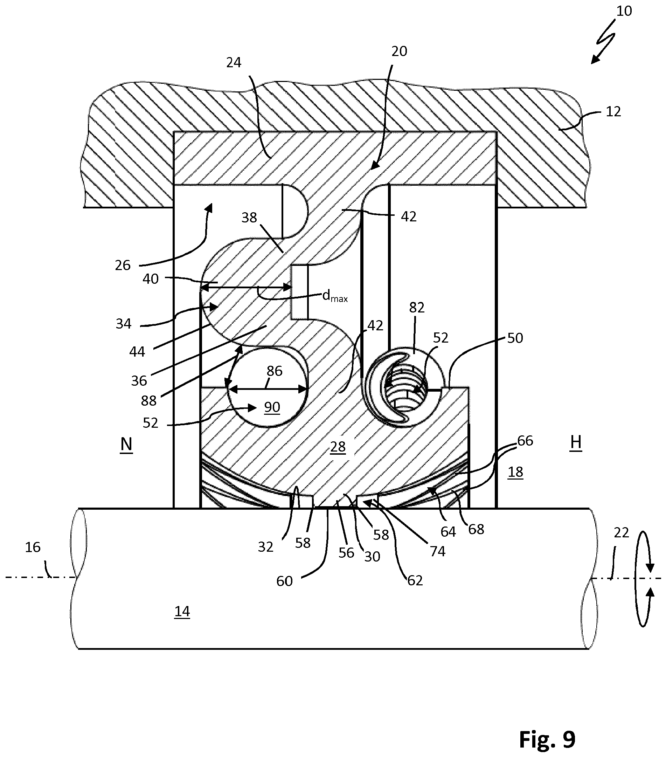

In **Fig. 9** ist eine Dichtungsanordnung 10 gezeigt, die sich von dem in Fig. 8 gezeigten Ausführungsbeispiel im Wesentlichen darin unterscheidet, dass in der niederdruckseitigen Ringnut 52 des Dichtkopfs 28 ein Stützring **90** angeordnet ist. In der hochdruckseitig angeordneten Ringnut 52 des Dichtkopfs 28 ist ein elastisch verformbares Vorspannelement 82, hier in Form einer Wurmfeder, angeordnet.

Der Stützring 90 besteht aus einem Material mit einem im Vergleich zum Elastomermaterial des Dichtungselements 20 größeren Elastizitätsmodul. Der Stützring 90 ist in sich formstabil und durch im Betrieb der Dichtungsanordnung 10 auftretende Kräfte nicht oder nur unwesentlich verformbar. Durch den Stützring 90 kann der Dichtkopf 28 des Dichtungselements 20 niederdruckseitig auch bei einer Druckbeaufschlagung des Hochdruckbereichs H abstandinvariant bzw. vollumfänglich mit einer konstanten oder im Wesentlichen konstanten Kontaktpressung an der Dichtfläche 32 gehalten werden. Der Stützring 90 kann mit anderen Worten - aufgrund der elastischen Verformbarkeit des Dichtungselements 20 - mittelbar als ein Vorspannelement wirken. Bei einer Druckbeaufschlagung der Hochdruckseite H kann sich der Dichtkopf 28 sowie auch der Verbindungsabschnitt 34 in einer zur Bewegungsachse 16 axialen Richtung am Stützring abstützen. Darüber hinaus kann sich der Verbindungsabschnitt 34 mit seinem ersten Schenkel 36 bzw. seinem Rückenabschnitt 40 in Richtung auf die Dichtfläche, d. h. hier in einer zur Bewegungsachse radialen Richtung, am Stützring 90 abstützen. Auf diese Weise kann einem Kippmoment, das über den Verbindungsabschnitt auf den Dichtkopf einwirkt, und damit einem unerwünschten Verkippen des Dichtkopfs 28 relativ zur Bewegungsachse 16 entgegengewirkt werden. Bei einer Druckbeaufschlagung der Hochdruckseite H können so unerwünschten Leckagen des Fluids von der Hochdruckseite H zur Niederdruckseite N, d. h. ein unerwünschter Blowby, vermieden werden.

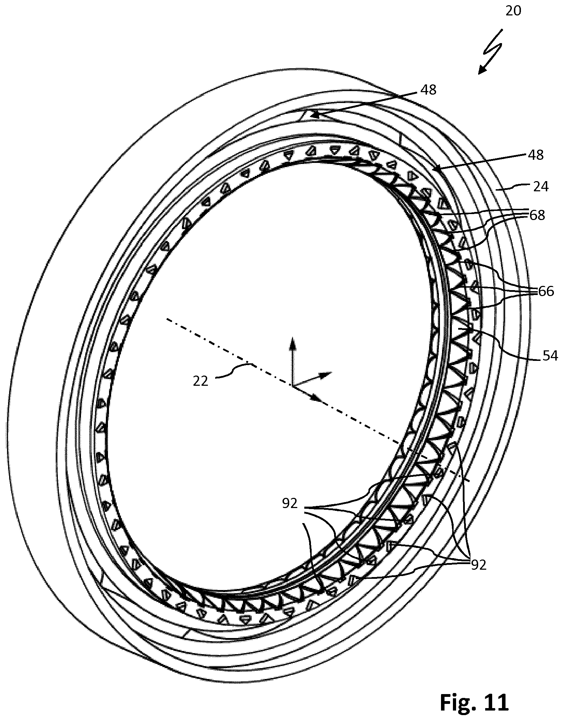

Das Profilsystem 64 des Dichtungselements 20 der vorstehend erläuterten Dichtungsanordnungen kann hochdruckseitig auch ein oder mehrere Strömungselemente aufweisen, die sich jeweils in Form eines Profilvorsprungs vom Dichtkopf 28 wegerstrecken. Derlei Strömungselemente können alternativ oder zusätzlich am Dichtkopf 28 angeordnet sein. Diese Strömungselemente sind dabei vorzugsweise an der der Dichtfläche 32 zuweisenden Stirnseite 54 des Dichtkopfs 28 und/oder an einer Seitenflanke des Dichtkopfs angeordnet, wie dies nachstehend im Zusammenhang mit den Figuren 11 bis 14 näher erläutert ist.

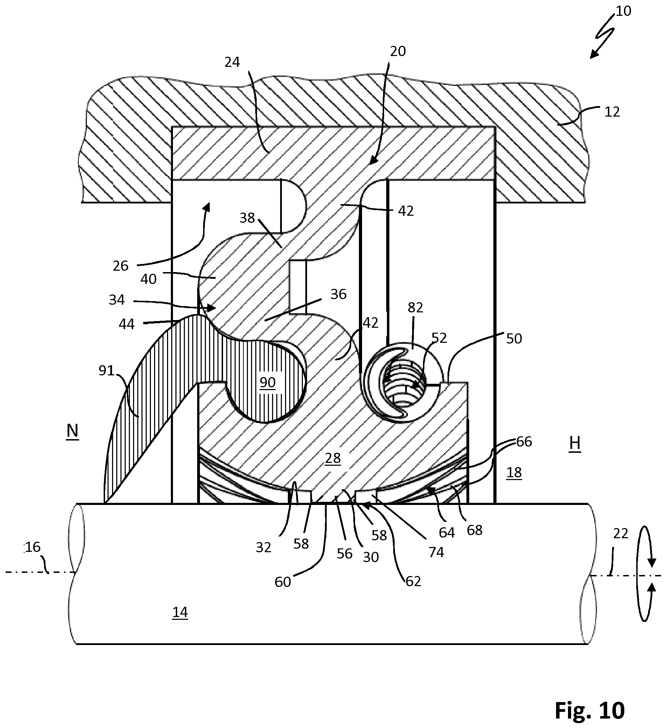

Gemäß der in **Fig. 10** gezeigten Dichtungsanordnung 10 kann der Stützring 90 mit einer (ringförmigen) Dicht- oder Abstreiflippe **91** versehen sein, die an der Dichtfläche 32 des zweiten Maschinenteils umlaufend anliegt.

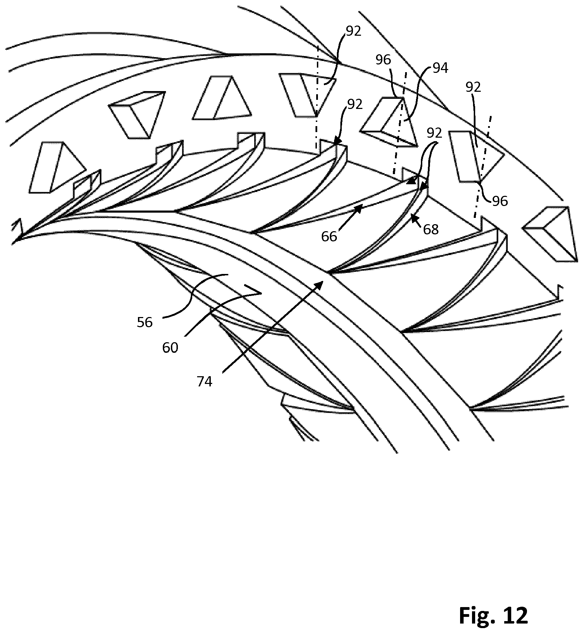

Das in den **Fign. 11** und **12** gezeigte Dichtungselement 20 weist zusätzlich zu den vorstehend beschriebenen ersten und zweiten Strömungselementen 66, 68 dritte und vierte Strömungselemente **92, 94** auf. Diese Strömungselemente 92, 94 weisen jeweils eine dreieckige Grund- bzw. Querschnittsform auf. Die dritten Strömungselemente weisen mit ihrer Spitze **96** in Richtung der Mittelachse 22 des Dichtungselements 20, während die Spitze 96 der vierten Strömungselemente von der Mittelachse 22 wegweisen.

Die dritten und vierten Strömungselemente 92, 94 sind in Umfangsrichtung des Dichtungselements 20 abwechselnd, in einer Reihe hintereinanderliegend angeordnet. Es versteht sich, dass die Strömungselemente 92, 94 auch jeweils zu mehreren gruppiert in einer Reihe bzw. mehrreihig am Dichtkopf angeordnet sein können.

Die als Profilvorsprünge ausgebildeten dritten und vierten Strömungselemente 92, 94 bilden - analog zu den Seitenflanken der nutförmigen ersten und zweiten Strömungselemente 66, 68, Anströmflächen **96** für das Fluid, durch die das Fluid - drehrichtungsabhängig - längs des Dichtspalts 18 zur Dichtzone 62 (Fig. 1) der Dichtungsanordnung 10 hin bzw. von der Dichtzone 62 wegbewegbar ist. In Ihrer Formgebung, Größe sowie in ihrem räumlichen Verteilungsmuster am Dichtungselement 20 können die Profilvorsprünge auf die Position sowie das räumliche Verteilungsmuster der hochdruckseitigen Öffnungen der nutförmigen ersten und zweiten Strömungselemente 66, 68 des Dichtkopfs 28 abgestimmt sein, um während des Betriebseinsatzes der Dichtungsanordnung 10 einen ausreichend großen Volumenstrom des Fluids pro Zeiteinheit zum Dichtabschnitt bzw. der Dichtzone 62 zu erzeugen.

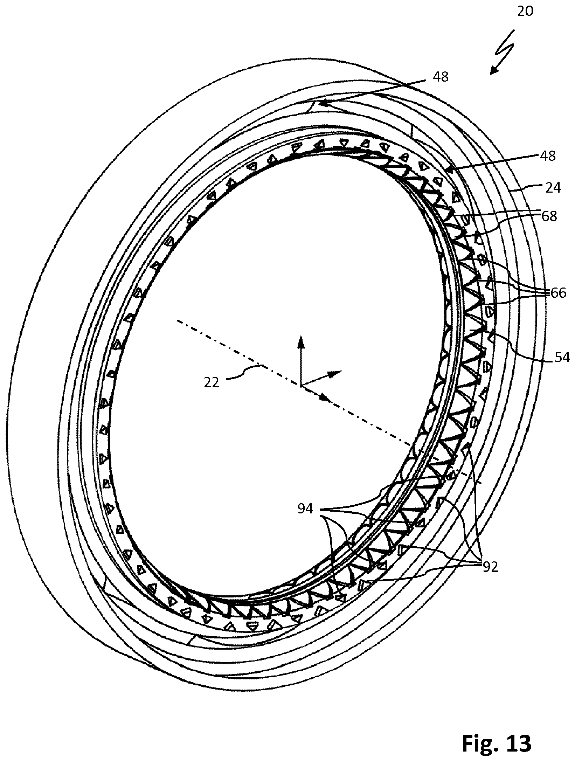

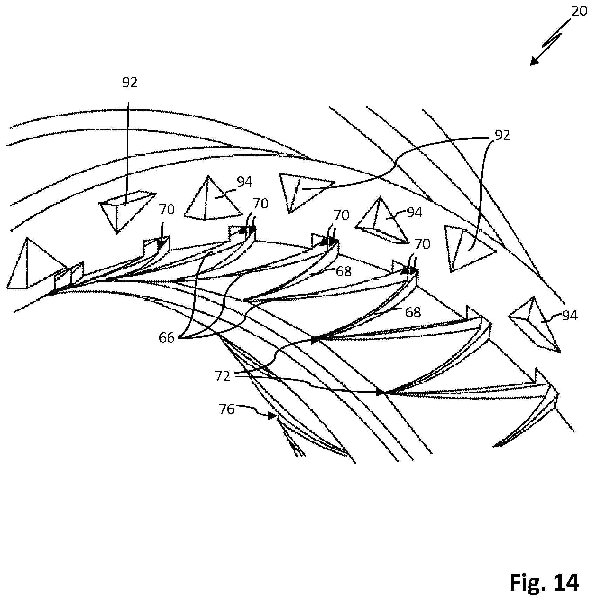

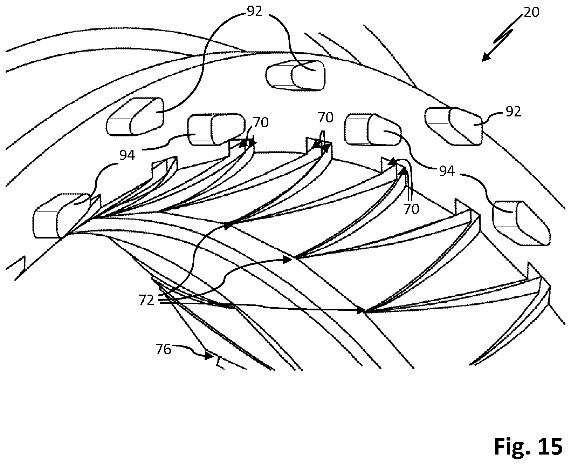

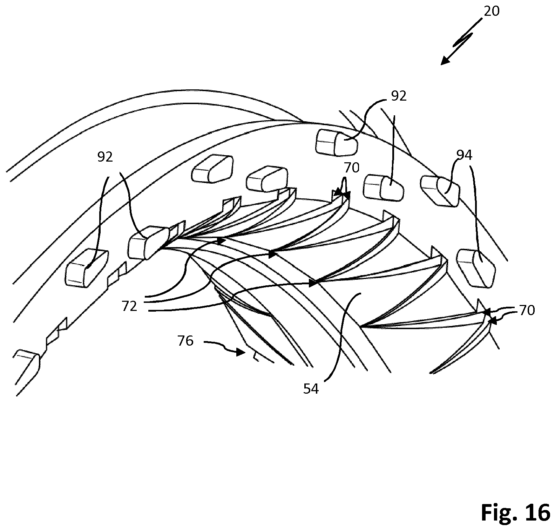

Gemäß dem in den **Figuren 13** und **14** gezeigten Ausführungsbeispiel können die als Profilvorsprung ausgeführten Strömungselemente 92, 94 auch eine rhomboide oder gemäß dem in den **Figuren 15** und **16** gezeigten Ausführungsbeispielen eine trapezförmige bzw. näherungsweise trapezförmige Form aufweisen.

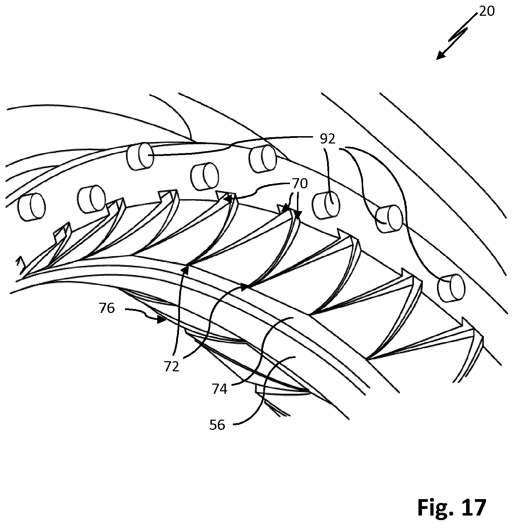

Bei dem in **Fig. 17** gezeigten Ausführungsbeispiel weisen die als Profilvorsprünge ausgebildeten Strömungselemente 92, 94 eine kreiszylindrische Grundform und folglich eine kreisrunde Querschnittsform auf. Diese dritten Strömungselemente 92 sind in Umfangsrichtung des Dichtungselements 20 zweireihig und relativ zueinander jeweils auf Lücke angeordnet, derart, dass ungeachtet der kreisrunden Querschnittsform der Strömungselemente 92, 94 eine gerichtete Fluidströmung längs des Dichtspalts 18 (Fig.1) erzeugt werden kann.

Im Betriebseinsatz kann das auf der Hochdruckseite H angeordnete Fluid durch die als Profilvorsprünge ausgebildeten Strömungselemente 92, 94 wirksam durchmischt und im Fluid Turbulenzen erzeugt werden, durch die im Fluid enthaltene partikuläre Verunreinigungen weiter zerkleinert und aufgeschlämmt werden. Auf diese Weise kann eine schädigende Wirkung der Partikel auf die Dichtfläche bzw. das Dichtungselement 20 weiter verringert werden.

## Patentansprüche

1. Dichtungsanordnung (10), umfassend:
- ein erstes und ein zweites Maschinenteil (12, 14), die unter Ausbildung eines Dichtspalts (18) voneinander beabstandet angeordnet und um eine Bewegungsachse (16) relativ zueinander bewegbar sind;
- ein Dichtungselement (20) mit einem Fußabschnitt (24), der an einer Dichtungshaltestruktur, insbesondere einer Haltenut (26), eines der beiden Maschinenteile (12, 14) gehalten angeordnet ist, und mit einem Dichtkopf (28) mit einer im Querschnitt konvex ausgeformten Stirnseite (54), welcher mit einem Dichtabschnitt (30) an einer Dichtfläche (32) des jeweilig anderen Maschinenteils (12, 14) dynamisch dichtend anliegt, um eine mit einem Fluid druckbeaufschlagbare Hochdruckseite H des Dichtspalts (18) gegenüber einer Niederdruckseite N abzudichten, **dadurch gekennzeichnet, dass** der Dichtabschnitt (30) einen Laufstreifen (56) umfasst, der sich stirnseitig vom Dichtkopf (28) wegerstreckt und welcher mit einer durchgehenden Lauffläche (60) versehen ist, wobei das Dichtungselement (20) hochdruckseitig mit zumindest einem Strömungselement (66, 68, 92, 94) in Form
- einer an der Stirnseite (54) angeordneten Nut, die zur Dichtfläche (32) hin offenen ausgeführt ist und welche dichtabschnittsseitig mit einer Umfangsnut (74) des Dichtkopfs (28) fluidisch verbunden ist, oder
- einer beidenends offenen Durchgangsbohrung, die dichtabschnittsseitig mit einer Umfangsnut (74) des Dichtkopfs (28) fluidisch verbunden ist; oder
- eines sich vom Dichtkopf (28) wegerstreckenden Profilfortsatzes versehen ist, durch das bei einer Relativbewegung der beiden Maschinenteile (12, 14) eine Fluidströmung bewirkt ist, derart, dass der Dichtkopf (28) hochdruckseitig im Bereich seines Dichtabschnitts (30) von dem Fluid angeströmt wird.

2. Dichtungsanordnung nach Anspruch 1, **dadurch gekennzeichnet**, die Nut beidenends offen ausgeführt ist.

3. Dichtungsanordnung nach Anspruch 1, **dadurch gekennzeichnet, dass** sich die Nut bzw. die Durchgangsbohrung in ihrem vom Fluid durchströmbaren Querschnitt in Richtung auf den Dichtabschnitt (30) des Dichtkopfs (28) zumindest abschnittsweise verjüngt.

4. Dichtungsanordnung nach Anspruch 1, **dadurch gekennzeichnet, dass** die Umfangsnut (74) durch den an der Dichtfläche (32) anliegenden Dichtabschnitt (30) des Dichtkopfs (28) seitlich unmittelbar begrenzt ist.

5. Dichtungsanordnung nach einem der vorhergehenden Ansprüche, **dadurch gekennzeichnet, dass** der Dichtabschnitt (30) des Dichtkopfs (28) zumindest eine ringförmige Profilnut (80) aufweist.

6. Dichtungsanordnung nach Anspruch 1, **dadurch gekennzeichnet, dass** das Strömungselement (66, 68, 92, 94) am Dichtkopf (28) angeformt ist.

7. Dichtungsanordnung nach Anspruch 1, **dadurch gekennzeichnet, dass** das Strömungselement (66, 68, 92, 94) eine ovale, elliptische, kreisrunde, dreieckige oder polygonale Querschnittsform aufweist.

8. Dichtungsanordnung nach einem der vorgehenden Ansprüche, **dadurch gekennzeichnet, dass** das Dichtungselement (20) mit einer Vielzahl von Strömungselementen (66, 68, 92, 94) versehen ist.

9. Dichtungsanordnung nach Anspruch 8, **dadurch gekennzeichnet, dass** die Strömungselemente (66, 68, 92, 94) in Umfangsrichtung des Dichtungselements ein oder mehrreihig am Dichtkopf (28) hintereinanderliegend angeordnet sind.

10. Dichtungsanordnung nach einem der vorhergehenden Ansprüche, **dadurch gekennzeichnet**, das der Dichtkopf (28) und der Fußabschnitt (24) über einen elastisch verformbaren Verbindungsabschnitt (34) des Dichtungselements (20) miteinander verbunden sind.

11. Dichtungsanordnung nach Anspruch 10, **dadurch gekennzeichnet, dass** der Verbindungsabschnitt (34) zumindest abschnittsweise einen nicht-linearen Querschnittsverlauf aufweist.

12. Dichtungsanordnung nach Anspruch 10 oder 11, **dadurch gekennzeichnet, dass** der Verbindungsabschnitt (34) mehrere materialgeschwächte Bereiche (48) aufweist, die in Umfangsrichtung des Dichtungselements (20), bevorzugt regelmäßig, voneinander beabstandet hintereinanderliegend angeordnet sind.

13. Dichtungsanordnung nach einem der Ansprüche 10 bis 12, **dadurch gekennzeichnet, dass** durch den Verbindungsabschnitt (34) eine vorgespannt dichtende Anlage des Dichtkopfs (28) an der Dichtfläche (32) bewirkt ist.

14. Dichtungsanordnung nach einem der vorhergehenden Ansprüche, **dadurch gekennzeichnet, dass** der Dichtkopf (28), bevorzugt an seiner dem Fußabschnitt (24) zuweisenden Rückseite (50), zumindest eine Haltestruktur, insbesondere eine Ringnut (52), aufweist, in oder an der ein elastisch verformbares Vorspannelement (82), insbesondere eine Wurmfeder, gehalten angeordnet ist, um den Dichtkopf (28) gegen die Dichtfläche (32) zu spannen.

15. Dichtungsanordnung nach einem der vorhergehenden Ansprüche, **dadurch gekennzeichnet, dass** der Dichtkopf (28), bevorzugt an seiner dem Fußabschnitt (24) zuweisenden Rückseite (50), zu beiden Seiten des Verbindungsabschnitts (34), d. h. niederdruckseitig und hochdruckseitig, eine Haltestruktur, insbesondere eine Ringnut (52) aufweist, wobei in/an beiden Haltestrukturen ein elastisch verformbares Vorspannelement (82), insbesondere eine Wurmfeder,
oder
in/an der niederdruckseitig angeordneten Haltestruktur ein Stützring (90) und in/an der hochdruckseitigen Haltestruktur ein elastisch verformbares Vorspannelement (82), insbesondere eine Wurmfeder, gehalten angeordnet sind.

16. Dichtungsanordnung nach einem der vorhergehenden Ansprüche, **dadurch gekennzeichnet, dass** das Dichtungselement (28) zumindest teilweise, bevorzugt vollständig, aus einem gummielastisch verformbaren Elastomermaterial besteht.

17. Dichtungselement (20) für eine Dichtungsanordnung (10) nach einem der vorhergehenden Ansprüche.

## Claims

1. Sealing arrangement (10), comprising:
- a first and a second machine part (12, 14) which are arranged at a distance from one another to form a sealing gap (18) and can be moved relative to one another about a movement axis (16);
- a sealing element (20) having a base portion (24) which is retained on a seal retaining structure, in particular a retaining groove (26), of one of the two machine parts (12, 14), and having a sealing head (28) with an end face (54) that is convex in cross section, a sealing portion (30) of which sealing head rests against a sealing surface (32) of the other machine part (12, 14) in question in a dynamically sealing manner in order to seal off a high-pressure side H of the sealing gap (18) that can be pressurized with a fluid from a low-pressure side N, **characterized in that** the sealing portion (30) comprises a tread (56) which extends away from the sealing head (28) at the end face and which is provided with a continuous tread surface (60), the sealing element (20) being provided, on the high-pressure side, with at least one flow element (66, 68, 92, 94) in the form of
- a groove which is arranged on the end face (54) and is designed to be open toward the sealing surface (32), and which is fluidically connected on the sealing-portion side to a circumferential groove (74) in the sealing head (28), or
- a through-hole which is open at both ends and which is fluidically connected on the sealing-portion side to a circumferential groove (74) in the sealing head (28); or
- a profile extension which extends away from the sealing head (28) and through which a flow of fluid is brought about when the two machine parts (12, 14) move relative to one other, such that the fluid flows against the sealing head (28) on the high-pressure side in the region of its sealing portion (30).

2. Sealing arrangement according to claim 1, **characterized in that** the groove is open at both ends.

3. Sealing arrangement according to claim 1, **characterized in that** the groove or through-hole cross section through which fluid can flow tapers at least in portions in the direction of the sealing portion (30) of the sealing head (28).

4. Sealing arrangement according to claim 1, **characterized in that** the circumferential groove (74) is directly delimited laterally by the sealing portion (30) of the sealing head (28) that rests against the sealing surface (32).

5. Sealing arrangement according to any of the preceding claims, **characterized in that** the sealing portion (30) of the sealing head (28) has at least one annular profile groove (80).

6. Sealing arrangement according to claim 1, **characterized in that** the flow element (66, 68, 92, 94) is integrally formed on the sealing head (28).

7. Sealing arrangement according to claim 1, **characterized in that** the flow element (66, 68, 92, 94) has an oval, elliptical, circular, triangular or polygonal cross-sectional shape.

8. Sealing arrangement according to any of the preceding claims, **characterized in that** the sealing element (20) is provided with a plurality of flow elements (66, 68, 92, 94).

9. Sealing arrangement according to claim 8, **characterized in that** the flow elements (66, 68, 92, 94) are arranged one behind the other in one or more rows on the sealing head (28) in the circumferential direction of the sealing element.

10. Sealing arrangement according to any of the preceding claims, **characterized in that** the sealing head (28) and the base portion (24) are interconnected via an elastically deformable connecting portion (34) of the sealing element (20).

11. Sealing arrangement according to claim 10, **characterized in that** the connecting portion (34) has a non-linear cross-sectional profile, at least in portions.

12. Sealing arrangement according to either claim 10 or claim 11, **characterized in that** the connecting portion (34) has a plurality of material-weakened regions (48) which are arranged one behind the other so as to be spaced apart in the circumferential direction of the sealing element (20), preferably at regular intervals.

13. Sealing arrangement according to any of claims 10 to 12, **characterized in that** the connecting portion (34) causes the sealing head (28) to rest against the sealing surface (32) in a pre-tensioned sealing manner.

14. Sealing arrangement according to any of the preceding claims, **characterized in that** the sealing head (28) has, preferably on the rear face (50) thereof facing the base portion (24), at least one retaining structure, in particular an annular groove (52), in or on which an elastically deformable pre-tensioning element (82), in particular a worm spring, is retained in order to tension the sealing head (28) against the sealing surface (32).

15. Sealing arrangement according to any of the preceding claims, **characterized in that** the sealing head (28) has, preferably on the rear face (50) thereof facing the base portion (24), a retaining structure, in particular an annular groove (52), on both sides of the connecting portion (34), i.e. on the low-pressure side and high-pressure side, with an elastically deformable pre-tensioning element (82), in particular a worm spring, being retained in/on the two retaining structures,
or
a support ring (90) being retained in/on the retaining structure arranged on the low-pressure side and an elastically deformable pre-tensioning element (82), in particular a worm spring, being retained in/on the retaining structure on the high-pressure side.

16. Sealing arrangement according to any of the preceding claims, **characterized in that** the sealing element (28) consists at least partially, preferably completely, of a rubber-elastically deformable elastomer material.

17. Sealing element (20) for a sealing arrangement (10) according to any of the preceding claims.

## Revendications

1. Arrangement d'étanchéité (10), comprenant :
- une première et une deuxième partie de machine (12, 14), qui sont disposées espacées l'une de l'autre en formant un interstice d'étanchéité (18) et peuvent se mouvoir l'une par rapport à l'autre autour d'un axe de mouvement (16) ;
- un élément d'étanchéité (20) comprenant une portion de pied (24), qui est disposée maintenue au niveau d'une structure de maintien de garniture d'étanchéité, notamment une rainure de maintien (26), de l'une des deux parties de machine (12, 14), et comprenant une tête d'étanchéité (28) dotée d'une partie latérale (54) à façonnage convexe en section transversale, laquelle repose, avec établissement d'étanchéité dynamique, par une portion d'étanchéité (30) contre une surface d'étanchéité (32) de l'autre partie de machine (12, 14) respective afin de rendre étanche un côté haute pression H de l'interstice d'étanchéité (18), pouvant être soumis à la pression par un fluide, par rapport à un côté basse pression N,
**caractérisé en ce que**
la portion d'étanchéité (30) comporte une bande de roulement (56) qui s'étend du côté frontal à l'écart de la tête d'étanchéité (28) et qui est pourvue d'une surface de roulement (60) d'un seul tenant, l'élément d'étanchéité (20) étant pourvu du côté haute pression d'au moins un élément d'écoulement (66, 68, 92, 94) sous la forme
- d'une rainure disposée au niveau du côté frontal (54), laquelle est réalisée ouverte vers la surface d'étanchéité (32) et qui, du côté de la portion d'étanchéité, est reliée de manière étanche aux fluides à une rainure périphérique (74) de la tête d'étanchéité (28), ou
- d'un trou traversant ouvert aux deux extrémités qui, du côté de la portion d'étanchéité, est relié de manière étanche aux fluides à une rainure périphérique (74) de la tête d'étanchéité (28), ou
- d'un prolongement profilé qui s'étend à l'écart de la tête d'étanchéité (28), par lequel un écoulement de fluide est produit lors d'un mouvement relatif des deux parties de machine (12, 14) de telle sorte que la tête d'étanchéité (28) est exposée à l'écoulement de fluide du côté haute pression dans la zone de sa portion d'étanchéité (30).

2. Arrangement d'étanchéité selon la revendication 1, **caractérisé en ce que** la rainure est réalisée ouverte aux deux extrémités.

3. Arrangement d'étanchéité selon la revendication 1, **caractérisé en ce que** la section transversale de la rainure ou du trou traversant qui peut être traversée par l'écoulement de fluide se rétrécit au moins dans certaines portions dans la direction vers la portion d'étanchéité (30) de la tête d'étanchéité (28).

4. Arrangement d'étanchéité selon la revendication 1, **caractérisé en ce que** la rainure périphérique (74) est délimitée latéralement directement par la portion d'étanchéité (30) de la tête d'étanchéité (28) qui repose contre la surface d'étanchéité (32).

5. Arrangement d'étanchéité selon l'une des revendications précédentes, **caractérisé en ce que** la portion d'étanchéité (30) de la tête d'étanchéité (28) possède au moins une rainure profilée (80) de forme annulaire.

6. Arrangement d'étanchéité selon la revendication 1, **caractérisé en ce que** l'élément d'écoulement (66, 68, 92, 94) est façonné sur la tête d'étanchéité (28).

7. Arrangement d'étanchéité selon la revendication 1, **caractérisé en ce que** l'élément d'écoulement (66, 68, 92, 94) possède une forme de section transversale ovale, elliptique, circulaire, triangulaire ou polygonale.

8. Arrangement d'étanchéité selon l'une des revendications précédentes, **caractérisé en ce que** l'élément d'étanchéité (20) est pourvu d'une pluralité d'éléments d'écoulement (66, 68, 92, 94).

9. Arrangement d'étanchéité selon la revendication 8, **caractérisé en ce que** les éléments d'écoulement (66, 68, 92, 94) sont disposés les uns derrière les autres en une ou plusieurs rangées sur la tête d'étanchéité (28) dans la direction périphérique de l'élément d'étanchéité.

10. Arrangement d'étanchéité selon l'une des revendications précédentes, **caractérisé en ce que** la tête d'étanchéité (28) et la portion de pied (24) sont reliées l'une à l'autre par le biais d'une portion de liaison (34) déformable élastiquement de l'élément d'étanchéité (20).

11. Arrangement d'étanchéité selon la revendication 10, **caractérisé en ce que** la portion de liaison (34) possède au moins dans certaines portions un tracé de section transversale non linéaire.

12. Arrangement d'étanchéité selon la revendication 10 ou 11, **caractérisé en ce que** la portion de liaison (34) possède plusieurs zones (48) matériellement affaiblies qui sont disposées les unes derrières les autres espacées les unes des autres dans la direction périphérique de l'élément d'étanchéité (20), de préférence régulièrement.

13. Arrangement d'étanchéité selon l'une des revendications 10 à 12, **caractérisé en ce que** la portion de liaison (34) provoque une application à effet d'étanchéité précontrainte de la tête d'étanchéité (28) contre la surface d'étanchéité (32).

14. Arrangement d'étanchéité selon l'une des revendications précédentes, **caractérisé en ce que** la tête d'étanchéité (28), de préférence au niveau de son côté arrière (50) orienté vers la portion de pied (24), possède au moins une structure de maintien, notamment une rainure annulaire (52), dans ou au niveau de laquelle est disposé de manière maintenue un élément de précontrainte (82) déformable élastiquement, notamment un ressort jarretière, afin de serrer la tête d'étanchéité (28) contre la surface d'étanchéité (32).

15. Arrangement d'étanchéité selon l'une des revendications précédentes, **caractérisé en ce que** la tête d'étanchéité (28), de préférence au niveau de son côté arrière (50) orienté vers la portion de pied (24), possède vers les deux côtés de la portion de liaison (34), c'est-à-dire du côté basse pression et du côté haute pression, une structure de maintien, notamment une rainure annulaire (52), un élément de précontrainte (82) déformable élastiquement, notamment un ressort jarretière, étant disposé de manière maintenue dans les / au niveau des deux structures de maintien
ou
un anneau d'appui (90) étant disposé de manière maintenue dans / au niveau de la structure de maintien disposée coté basse pression et un élément de précontrainte (82) déformable élastiquement, notamment un ressort jarretière, étant disposé de manière maintenue dans / au niveau de la structure de maintien coté haute pression.

16. Arrangement d'étanchéité selon l'une des revendications précédentes, **caractérisé en ce que** l'élément d'étanchéité (28) se compose au moins partiellement, de préférence entièrement d'un matériau élastomère déformable par élasticité de caoutchouc.

17. Élément d'étanchéité (20) pour un arrangement d'étanchéité (10) selon l'une des revendications précédentes.
